# EUROPEAN PATENT SPECIFICATION

(11) **EP 2 048 473 B1**
(45) Date of publication and mention of the grant of the patent: **22.12.2010**
(21) Application number: 08445031.1
(22) Date of filing: 09.10.2008
(51) Int. Cl.: G01B 11/275

(54) **Method and device for measuring angles of wheels and axles**
Verfahren und Vorrichtung zum Messen von Winkeln von Rädern und Achsen
Procédé et dispositif pour mesurer les angles de roues et d'essieux

(30) Priority: 11.10.2007 SE 0702284
(43) Date of publication of application: 15.04.2009
(73) Proprietor: SAMUELSSON, Jonas, S-702 20 Örebro (SE)
(72) Inventor: SAMUELSSON, Jonas, S-702 20 Örebro (SE)
(74) Representative: Berglund, Erik Wilhelm

(56) References cited:
- WO-A-01/38843
- WO-A-02/03027
- DE-C1- 4 212 426
- US-A- 5 724 743
- US-A1- 2005 068 522

## Description

The present invention concerns methods and devices for the measuring of angles and parallelism for axles, for instance wheel angles of vehicles or axle parallelism in machines.

Wheel angle measuring apparatuses for vehicle wheels where digital cameras are used are known, as for instance US 5724743. The wheel alignment apparatus uses a perspective image of a known target to attached to the wheel, to determine the orientation of the target and thereby the alignment of the wheel. At measuring the wheel is rotated providing a circular path that a camera will record as an ellipse, from the orientation of the ellipse the axle direction can be calculated and used to obtain the wheel angles.

In US 20050068522 distance measuring between apparatus and wheel serve as a base for calculating wheel angles.

In WO 02/03027 A, markers on wheel and body together with a camera provide the base for wheel angle calculations.

In WO 0138843 A1 the wheel angle measuring is based on the measuring of the positions of three different points that are not in a straight line. Likewise the positions of three points are measured.

In DE 42 12 426 C1 two synchronizes video cameras registers from different directions one marking on each wheel located outside of its axle. At this the wheels arc rotated so that the markers are registered in different positions, and from these positions the positions of the axles relative the cameras are calculated.

More specifically the object of the invention is to eliminate the time consuming adjustment of markers on axles or wheels so that these markers or the like coincide with the rotatation axises in question. In the case of vehicle wheels the influence of skewness of the wheels and associated adjustment work is eliminated.

In accordance with the invention the above object is solved according to the method of claim 1 and the device of claim 7 with

two by an instrument observable markers each a distance out from the centre and with different axial location. At the rotation of the shaft the markers will follow circles, the centres of which being on the extension of the rotational axis of an axle or a wheel, the distance between the centres of the path of the markers in the measured plane and the axial distance between the markers provide the angle,

Preferably the perspective of the registration device relative the circle is taken in account. To facilitate this the distance between circle and recording instrument is measured.

In the case of measurement of wheel angles on cars with two markers can be noted that a possible skewness of the wheel or a marker carrier on the wheel is of no influence. With knowledge of the axial distance between the markers a camera facing the car toe-in or toe-out can be calculated as the distance between the centres of the two circles in a horizontal direction divided with the distance axially between the markers.

The camber angle is obtained from the distance vertically between the centres of the circles divided with the axial distance between the markers.

The measures must be normed by consideration taken to the distance and perspective of the camera to the markers. This can be achieved by a tape ruler or by placing a further marker on the marker bracket in the same plane as for instance the one closest to the wheel. The camera can by triangulation measure the distance between camera and markers.

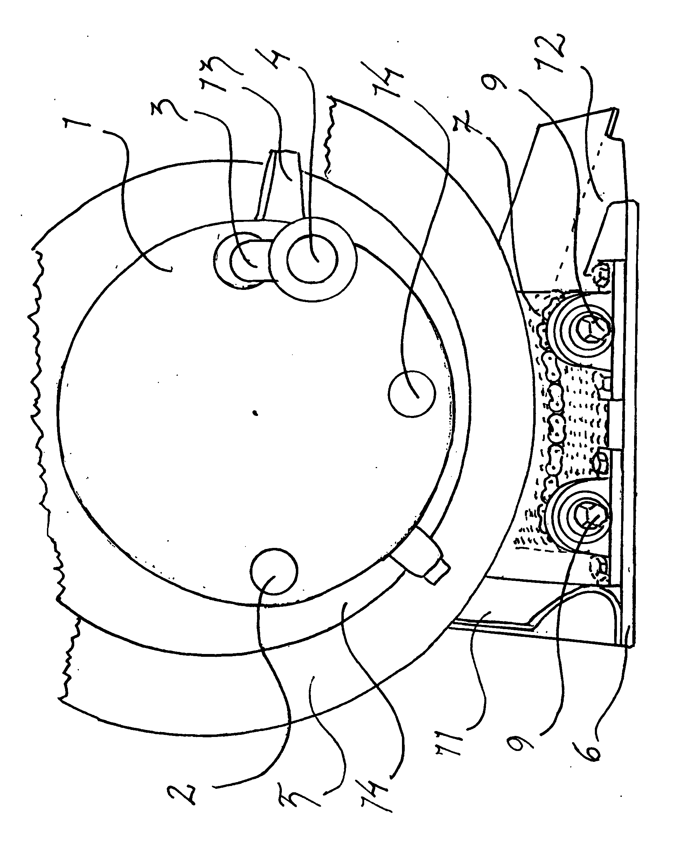

Further advantages and characteristics of the invention are apparent from the following description of a preferred embodiment with reference to the enclosed drawing.

The embodiment shown in the drawing of a device in accordance of the invention includes a marker carriers provided with markers and intended for mounting on the outer side of the wheels, two cameras that at use are placed on each side of the vehicle and facing the wheels, a computer connected to the cameras, and two belt conveyors on which the wheels of the car are placed.

The marker carriers include brackets 13 that are clamped fast or snapped on to the outer side of the wheel rim 14. Further the marker carrier comprises an outward facing round disc 1 essentially parallel with the rim. On said disc a circular marker 2 of light or reflecting material is eccentrically arranged while the disc in itself is black. On the disk an eccentrically fastened pin 3 is further fastened, extending out from the disk away from the rim and perpendicular out from the disk. In the outer end of the pin a further circular marker 4 is arranged, also this light or reflecting. The two cameras facing the wheels and thus also the markers are of conventional type and arranged in particular to register the positions of the markers and feed this information to the computer.

The belt conveyor devices on which the wheels of the car are rolled up include each two parallel shafts 9 on which chain sprockets have been arranged and over each pair of chain sprockets a chain 7 runs so that the chains together constitute a slightly downwards bulging bed supporting the wheels. The axles 9 are journalled in bearings, the bearing houses of which being mounted on a flat body 6. Seen in the roll on direction of the wheel a small ramp 12 is arranged in front of the chains allowing the wheel to roll up and on the other side of the chains 7 in the roll on direction an upward protruding stop 11 is arranged preventing the wheel from rolling over. The axles 9 are provided with key grips in their ends and can consequently be driven by for instance a nut driver. In order to prevent the wheel from climbing off on one side or the other due to a deviation between a running direction of the wheel and the longitudinal direction of the chains at the rolling of the wheel on the chains, the chain supporting body 6 is advantageously journalled pivotable allowing the chains to adjust their direction according to that of the wheel when this is rotated.

At the above described device a measuring process may be as follows. The cameras and the belt conveyors are located in line with each other with the cameras in the outer ends and the belt conveyors in between. The cameras are connected to the computer and activated as the computer. Before the car with a wheel pair is driven up on the belt conveyors the cameras are aligned. This may of course be done by means of suitable sighting means alternatively one can use the pictures shown on screen of the computer and generated by the cameras of the opposite camera. One can also imagine that the aligning of the cameras, in addition to a rough manual aligning is obtained by the computer adapting the coordinate systems of each camera, that is to be used for measuring, to the centre of the other camera, for which the cameras may for instance be provided with a marker ring at the ocular of each camera.

When the cameras have been aligned the car may be driven up on the belt conveyors with one pair of wheels, for which one wish to measure the wheel angles and then in particular toe-in and camber. Initially the distance from each camera to the marker provided disks on each wheel is measured. For the sake of security the wheel pair that is not on the belt conveyors is blocked or braked.

One or both wheels that are on the belt conveyors are rotated. When a wheel is rotated the camera registers for each marker a ring shaped path. The marker on the disc and the one on the axially protruding pin are preferably different in a suitable way for identification in the computer. The registered ring-shaped marker paths are actually mostly ellipses but look almost circular. The ring shaped paths are centred round the extension of the rotation axis of the wheel. With knowledge of the distance between the markers axially the computer can calculate toe-in and camber-angle as described above. Instead of measuring the distance from the marker disc to the camera with a tape ruler one can imagine to arrange an additional marker 14 on the marker disk using the computer to calculate the distance by means of triangulation before the rotation begins.

Instead of, as has been described above, setting up the used components as loose parts one can imagine these rigidly mounted in floor and wall respectively, alternatively that rigid mounting means are arranged in the floor and that belt conveyors and cameras are mounted when measuring is to take place.

Even if the car at the placing on the belt conveyors do not end up with its longitudinal line of symmetry precisely perpendicular to the connection line between the cameras the toe-in measure will be sufficiently exact if the misalignment is moderate. The reason is that the variation in toe-in is very small in a relatively wide area around the wheel direction for driving straight forward. By not only measuring the mutual location of the marker rings but also for instance the location of the marker rings closest to the wheel in relation to the adjusted zero positions of the cameras the computer can alert if the car is too misaligned.

For the measuring of the camber- angle the above mentioned oblique position is not important, possibly if the car is extremely unevenly loaded or the ground is very inclined. This can be monitored in the same way as for toe-in.

For the identification of the markers these may have different gray scales or different colours or even be placed in such a way that mistakes are impossible, for instance the marker on the disc and closest to the wheel may have a smaller radius so that it will always be the inner one.

At the calculation of the centres of the ring shaped marker paths the inner, as well as the outer edge can be used as well as many points on each "ellipse", since the formula for these is simple.

Within the frame of the inventive thought one can also imagine the cameras being mounted in a jig that is mounted on a car and that this rolls on the ground at measuring.

Instead of using cameras as measuring instruments and of these detectable markers one can use other versions of instruments and markers. For instance one can use a technique similar to that used for levelling instruments where the instrument emit a laser beam that by special reflectors is reflected back to the instrument that scans the marker area and registers directions were reflexes are obtained.

As realized the invention provides a good precision and a very simple handling.

## Claims

1. Method for the measuring of angles or parallelism for axles or wheels, for instance wheel angles of vehicles or axle parallelism in machines, **characterized in that** on each axle or wheel that is to be measured two markers (2, 4) are arranged axially separated and eccentrically in relation to the rotational axis of the axle or wheel, the axle or the wheel is rotated and the paths or points of these paths for the marker are registered by an instrument starting from which the centres of the path of the markers are calculated and related to the distance axially between the markers for the calculation of axle or wheel angles, that
the instrument is a camera facing the wheel or axle end from the side and that for each marker are registered the height and lateral coordinates of the path centre, that is vertically and horizontally perpendicular to the view direction of the camera, and that the difference between the coordinates related to the distance between the markers axially is then used to obtain the angles, in the case with a wheel camber and toe-in respectively.

2. Method according to claim 1, **characterized in that** starting from the distance and perspective between a marker and used instruments the angle calculations are corrected with consideration to this.

3. Method to claim 1, **characterised in that** the distance between the measuring instruments and one or both makers is measured by means of the camera (triangulation) and an additional marker (14) on the same distance from the instrument as one of the markers for the angle measuring.

4. Method according to claim 1, fnr the measuring for wheel angles, **characterized in that** two opposed cameras are arranged, for the measuring of two sides at the same time, facing each other and aligned.

5. Method according to claim 1, **characterized in that** a computer is used for the calculation.

6. Method according to claim 1, for the measuring of wheel angles, **characterized in that** at measuring the wheels arc placed on belt conveyers (7) for the rotation of the wheels at the measuring.

7. Measuring device for the execution of the method according to claim 1, for the measuring of axle or wheel angles, **characterized in that** it comprises a registration instrument, for instance a camera, that from the side faces the wheel or the axle end, and that the device further includes a marker carrier on the wheel or axle with two eccentric and axially separately placed markers (2, 4) on the side facing the registration instrument, and a computer connected to the registration instrument, the computer being arranged so that the centres of the paths of the markers are calculated and related to the distance axially between the markers for the calculation of axle or wheel angles, the device further
including belt conveyors for the wheels, which belt conveyors are pivotable on vertical axles so that they adjust to the running direction of the wheels, preventing the wheels from climbing off the conveyers laterally when they are rotated.

## Patentansprüche

1. Verfahren für das Messen von Winkeln oder der Parallelität für Achsen oder Rädern, beispielsweise Radwinkeln von Fahrzeugen oder Achsenparallelität bei Maschinen, **dadurch gekennzeichnet, dass** auf jeder Achse oder jedem Rad, die/das zu messen ist, zwei Markierungen (2, 4) axial separiert und exzentrisch im Verhältnis zur Drehachse der Achse oder des Rades angeordnet werden, wobei die Achse oder das Rad gedreht wird und die Pfade oder Punkte dieser Pfade für die Markierungen registriert werden von einem Instrument, von dem beginnend die Zentren des Pfades der Markierungen kalkuliert und in Beziehung gesetzt werden zum axialen Abstand zwischen den Markierungen zum Berechnen der Achsen oder Radwinkel,
dass das Instrument eine Kamera ist, die dem Rad oder dem Achsenende von der Seite gegenüber steht, und dass für jede Markierung die Höhe und die lateralen Koordinaten der Mitte des Pfades registriert werden, die vertikal und horizontal senkrecht zur Blickrichtung der Kamera ist, und dass der Unterschied zwischen den Koordinaten axial im Verhältnis zu dem Abstand zwischen den Markierungen gesetzt wird und dann verwendet wird, um die Winkel zu erhalten, und zwar im Fall eines Radsturzes bzw. einer Vorspur.

2. Verfahren nach Anspruch 1, **dadurch gekennzeichnet, dass** ausgehend vom Abstand und der Perspektive zwischen einer Markierung und den verwendeten Instrumenten die Winkelberechnungen unter Berücksichtigung darauf korrigiert werden.

3. Verfahren nach Anspruch 1, **dadurch gekennzeichnet, dass** der Abstand zwischen den Messinstrumenten und einer oder beiden Markierungen gemessen wird mittels der Kamera (Triangulation) und einer zusätzlichen Markierung (14) im gleichen Abstand von dem Instrument wie eine der Markierungen für die Winkelmessung.

4. Verfahren nach Anspruch 1 für die Messung von Radwinkeln, **dadurch gekennzeichnet, dass** zwei einander gegenüberstehende Kameras vorgesehen sind für die Messung von zwei Seiten zur gleichen Zeit, und zwar einander gegenüberliegend und aufeinander ausgerichtet.

5. Verfahren nach Anspruch 1, **dadurch gekennzeichnet, dass** ein Computer für die Berechnung verwendet wird.

6. Verfahren nach Anspruch 1 für die Messung von Radwinkeln, **dadurch gekennzeichnet, dass** bei der Messung die Räder auf Bandförderern (7) zur Drehung der Räder bei der Messung platziert werden.

7. Messvorrichtung zur Durchführung des Verfahrens nach Anspruch 1 für die Messung von Achs- oder Radwinkeln, **dadurch gekennzeichnet, dass** sie ein Registrierungsinstrument umfasst, beispielsweise eine Kamera, die das Rad oder das Ende der Achse von der Seite betrachtet, und dass die Vorrichtung weiterhin einen Markierungsträger auf dem Rad oder der Achse mit zwei exzentrischen und axial separat platzierten Markierungen (2, 4) auf der dem Registrierungselement gegenüberliegenden Seite umfasst, und mit einem Computer, der mit dem Registrierungsinstrument verbunden ist, wobei der Computer so angeordnet ist, dass die Zentren der Pfade der Markierungen berechnet und in Beziehung gesetzt werden zu dem axialen Abstand zwischen den Markierungen für die Berechnung der Achsen- oder Radwinkel, wobei die Vorrichtung weiterhin Bandförderer für die Räder umfasst, die auf vertikalen Achsen verschwenkbar sind, so dass sie sich an die Laufrichtung der Räder anpassen, um zu verhindern, dass die Räder die Bandförderer seitwärts verlassen, wenn sie gedreht werden.

## Revendications

1. Procédé pour la mesure d'angles ou de parallélisme pour des essieux ou des roues, par exemple des angles de roue de véhicule ou le parallélisme d'essieux dans des machines, **caractérisé en ce que** sur chaque essieu ou chaque roue qui doit être mesuré, deux marqueurs (2, 4) sont agencés axialement séparés et excentriquement en relation à l'axe de rotation de l'essieu ou de la roue, l'essieu ou la roue est mis en rotation et les trajets ou points de ces trajets pour les marqueurs sont enregistrés par un instrument à partir duquel les centres du trajet des marqueurs sont calculés et liés à la distance axialement entre les marqueurs pour le calcul des angles d'essieu ou de roue, **en ce que** l'instrument est une caméra ou un appareil photo en face de la roue ou de l'extrémité d'essieu depuis le côté et **en ce que** pour chaque marqueur, sont enregistrées la hauteur et les coordonnées latérales du centre du trajet, c'est-à-dire verticalement et horizontalement perpendiculaire à la direction de visualisation de la caméra, et **en ce que** la différence entre les coordonnées liées à la distance entre les marqueurs axialement est ensuite utilisée pour obtenir les angles, respectivement avec une inclinaison latérale et un pincement de roue.

2. Procédé selon la revendication 1, **caractérisé en ce qu'**en commençant à partir de la distance et de la perspective entre un marqueur et des instruments utilisés, les calculs d'angle sont corrigés en conséquence.

3. Procédé selon la revendication 1, **caractérisé en ce que** la distance entre les instruments de mesure et un ou les deux marqueurs est mesurée au moyen de la caméra (triangulation) et d'un marqueur additionnel (14) sur la même distance depuis l'instrument que l'un des marqueurs pour la mesure d'angle.

4. Procédé selon la revendication 1, pour la mesure d'angles de roue, **caractérisé en ce que** deux caméras opposées sont agencées, pour la mesure de deux côtés en même temps, en face l'une de l'autre et alignées.

5. Procédé selon la revendication 1, **caractérisé en ce qu'**un ordinateur est utilisé pour le calcul.

6. Procédé selon la revendication 1, pour la mesure d'angles de roue, **caractérisé en ce que** lors de la mesure, les roues sont placées sur des convoyeurs à courroie (7) pour la rotation des roues lors de la mesure.

7. Dispositif de mesure pour l'exécution du procédé selon la revendication 1, pour la mesure d'angles d'essieu ou de roue, **caractérisé en ce qu'**il comprend un instrument d'enregistrement, par exemple une caméra, qui de côté fait face à la roue ou à l'extrémité d'essieu, et **en ce que** le dispositif inclut en outre un porte-marqueur sur la roue ou l'essieu avec deux marqueurs excentriques et placés axialement séparés (2, 4) sur le côté en face des instruments d'enregistrement, et un ordinateur connecté à l'instrument d'enregistrement, l'ordinateur étant agencé de sorte que les centres des trajets des marqueurs soient calculés et liés à la distance axialement entre les marqueurs pour le calcul d'angles d'essieu ou de roue, le dispositif incluant en outre des convoyeurs à courroie pour les roues, lesquels convoyeurs à courroie sont pivotants sur des essieux verticaux de sorte qu'ils s'adaptent à la direction de déplacement des roues, empêchant les roues d'escalader les convoyeurs latéralement lorsqu'elles sont mises en rotation.
